Europäisches Patentamt

European Patent Office

Office européen des brevets

(11) Publication number: **0 426 414 A2**

# EUROPEAN PATENT APPLICATION

(21) Application number: 90311848.7

(22) Date of filing: 30.10.90

(51) Int. Cl.⁵: **G06F 13/40**

(30) Priority: 30.10.89 JP 282301/89

(43) Date of publication of application:
08.05.91 Bulletin 91/19

(84) Designated Contracting States:
DE FR GB

(71) Applicant: **KABUSHIKI KAISHA TOSHIBA**
**72, Horikawa-cho Saiwai-ku**
**Kawasaki-shi Kanagawa-ken Tokyo(JP)**

(72) Inventor: **Hibi, Kenji, c/o, Intellectual Property**
**Div.**
**Toshiba Corporation, 1-1, Shibaura 1-chome**
**Minato-ku, Tokyo 105(JP)**

(74) Representative: **BATCHELLOR, KIRK & CO.**
**2 Pear Tree Court Farringdon Road**
**London EC1R 0DS(GB)**

(54) Computer system capable of permitting replaceable connection of external storage device.

(57) A computer system comprises a computer having a connector to which an additional storage means having a disk storage device can be directly connected. Two different types of disk storage can be employed and one of the disk storage devices can be connected to the computer and to the other disk storage device.

Fig. 1

The present invention relates to a hard disk drive and a floppy disk drive which are each connectable as an external storage device to a personal computer.

In the recent field of personal computers, more compact and lighter computers are pursued, and portable, small personal computers having substantially the same performance as desktop type computers have been developed, quickly becoming popular.

There are a hard disk drive and a floppy disk drive as external storage devices for use in personal computers of this type. These external storage devices are constituted compact and lighter due to higher integration of the internal logic circuits and higher recording density. Some of the external storage devices are designed to have a hard disk drive or a floppy disk drive as one pack unit, permitting a user to select the desired pack of external storage device and connect it to a personal computer as needed. Since these pack unit type of external storage devices can be easily installed in the body of a personal computer, they have high portability. In addition, replacing one pack unit to another as needed can allow different types of external storage devices to be used in a single personal computer.

These conventional pack unit type external storage devices are not designed to cope with possible future expansion, but are simply designed to permit the use of only a single pack unit type of external storage device at a time, making it impossible to provide the effective utilization of these external storage devices in light of expandability of a computer system in use. In other words, a plurality of pack unit type external storage devices cannot be used together in the computer system.

It is therefore an object of the present invention to provide a pack unit type external storage device with high expandability, which allows for the effective use of the limited internal space of a personal computer.

To achieve the above object, according to one aspect of the present invention, there is provided a computer system comprising first storage means having a storage device of a first storage mode and at least one connector to connect to a computer or another storage means, second storage means having a storage device of a storage mode different from that of the first storage means and at least two connectors to connect to a computer or another storage means, and a computer including at least one connector to connect to the first storage means or the second storage means, means for discriminating a connecting status of the first storage means or the second storage means, and means for accessing the first storage means or the second storage means based on the discriminated connecting status.

According to another aspect of the present invention, there is provided an external storage device comprising a first pack unit type storage device having a disk mechanism section of a first mode, a first connector to connect to the computer or another pack unit type external storage device and a second connector to connect to another pack unit type external storage device, and a second pack unit type storage device having a disk mechanism section of a second mode, and a connector to connect to the computer or another pack unit type external storage device.

Fig. 1 is a diagram illustrating the outline of a personal computer and pack units according to the present invention;

Fig. 2 is a block diagram illustrating the structure of a personal computer according to the present invention;

Fig. 3 is a block diagram showing the structure of a pack unit receiving slot in a computer body;

Fig. 4 is a block diagram showing the structure of a hard disk drive pack unit;

Fig. 5 is a block diagram illustrating the structure of a floppy disk drive pack unit; and

Fig. 6 is a diagram for explaining how each pack unit is connected to a pack unit receiving slot in the computer body.

A preferred embodiment of the present invention will now be described referring to the accompanying drawings.

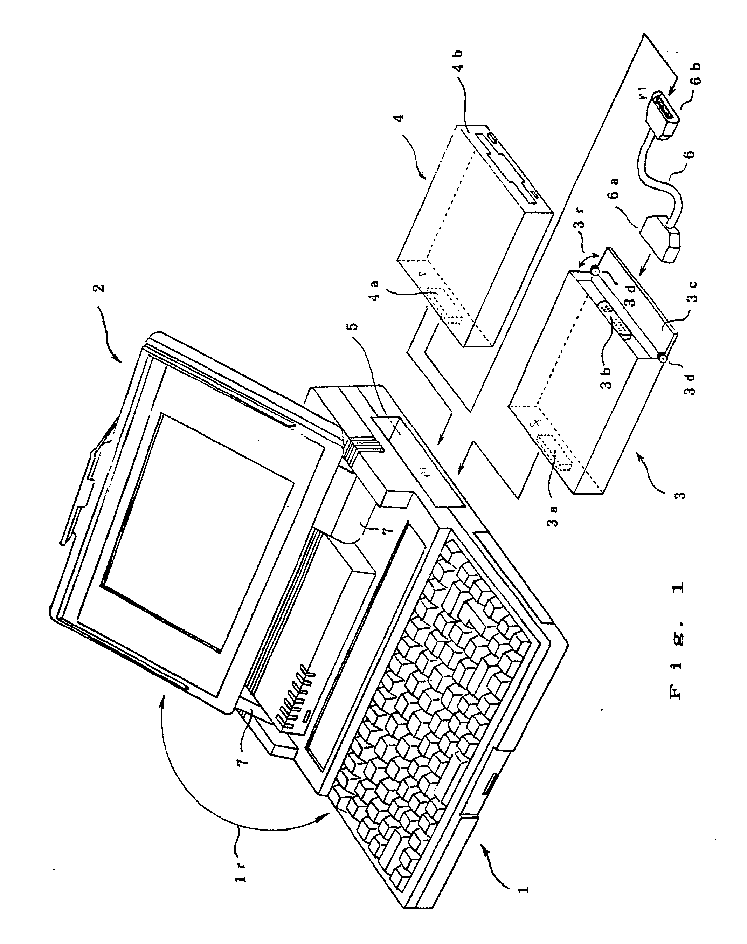

Fig. 1 illustrates the outlines of a personal computer and pack units according to the present invention.

The personal computer in Fig. 1 is a so-called laptop type computer, which is portable and operable on not only commercially available AC power, but also an internal battery (such as an ordinary battery or a chargeable battery) in order to improve the feature of portability.

A display 2 is designed to swing on a hinge 7 in the direction of the arrow 1r with respect to the body 1.

A pack unit receiving slot 5 (hereafter referred to as "receiving slot") is provided at one side of the body 1 to receive a pack unit device. The following description of this embodiment will discuss the control of pack units and data processing in the case of using pack units of external storage devices.

A hard disk drive pack unit 3 (hereafter referred to as "HDD unit") includes a connecter 3a to connect to a connector (not shown) in the receiving slot 5, and a connector 3b to connect to another pack unit. Further, inside the unit 3 are provided a hard disk controller (hereafter referred to as "HDC") and a hard disk drive (hereafter referred to as "HDD") (not shown). When the connector 3b is not connected to another pack unit, the connector cover 3c is closed to protect the connecter 3b. The connector cover 3c pivots on a hinge 3d as shown by the arrow 3r.

A floppy disk drive pack unit 4 (hereafter referred to as "FDD unit") has a connector 4a to connect to a connector (not shown) in the receiving slot 5, and a floppy disk loading portion formed on its front face 4b. The pack unit 4 also contains a floppy disk drive (hereafter referred to as "FDD") (not shown).

A connecting cable 6 is to mechanically and electrically connect the HDD unit 3 to the FDD unit 4 when the HDD unit 3 is installed in the computer body with the FDD unit 4 expanded. For example, a connector 6a of the cable 6 is connected to the connector 3b of the HDD unit 3, and a connector 6b is connected to the connector 4a of the FDD unit 4.

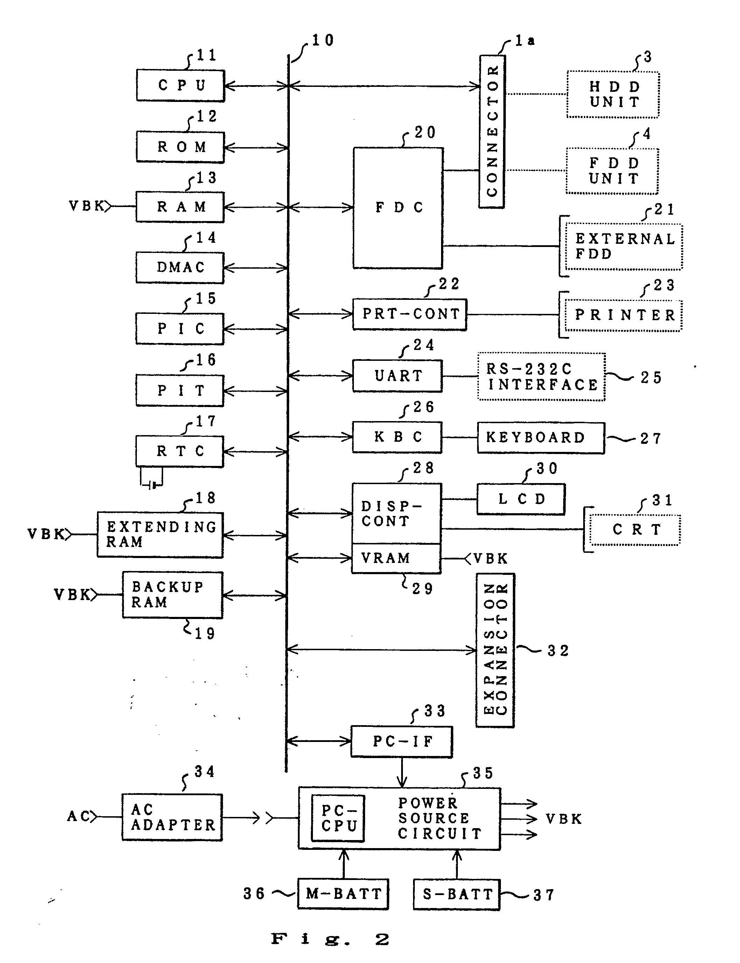

Fig. 2 is a block diagram illustrating the structure of the personal computer according to the present invention. A system bus 10 comprises an address bus, a data bus, and a control bus, and transfers necessary information for the operation of the system. The following components are connected to the system bus 10.

A CPU 11 controls the entire system. A ROM 12 stores a fixed program, fixed data and so forth, and a RAM 13 stores a program and data, which are to be processed. The RAM 13 has a capacity of 1.5 MB (Mega Bytes); 640 KB (Kilo Bytes) is used for a main storage device, and the remaining 896 KB serves as a so-called hard RAM, which is always supplied with a backup voltage (VBK) even when the power is off.

A DMAC (Direct Memory Access Controller) 14 controls data transfer between a memory and input/output devices. A PIC (Programmable Interrupt Controller) 15 is a controller which can be set by a program, and sends an interrupt signal. A PIT (Programmable Interval Timer) 16 is a timer which can be set by the program, and counts a set time. An RTC (Real Time Clock) 17 is a clock with its own driving battery and measures the present time.

An extending RAM 18 is installed detachable in its own card slot of the computer body. The RAM 18, which has a relatively large memory capacity, is supplied with the backup voltage (VBK). A backup RAM 19 holds data to realize a resume function, and also receives the backup voltage (VBK).

A connector 1a is to connect a pack unit to the computer body. The HDD unit 3 or the FDD unit 4 can be connected to the connector 1a. These units 3 and 4 are each adapted to be provided detachable in the receiving slot 5 of the computer body as described above. The HDD unit 3 contains the HDD and the HDC for controlling the HDD. The FDD unit 4 has the FDD inside. A floppy disk controller (FDC) 20 is installed in the computer body for controlling the FDD in the FDD unit 4. Further, the FDC 20 is connected to an external floppy disk drive (EXTERNAL FDD) 21 as needed.

A printer 23 is connected to a printer controller (PRT-CONT) 22, as needed. A UART (Universal Asynchronous Receiver/Transmitter) 24 is used as an input/output interface, and asynchronously controls data exchange between two devices through a communication channel. An interface device 25 is connected to the input/output interface as needed, and comprises an RS-232C interface device, for example. A keyboard 27 is connected to a keyboard controller (KBC) 26. A liquid crystal display (LCD) 30 is connected to a display controller (DSP-CONT) 28. Further, a CRT 31 is connected to the DSP-CONT 28 when needed. A VRAM (Video RAM) 29, which stores display image data, is supplied with the backup voltage (VBK). An expansion connector 32 is connected to an expansion unit as needed.

A PC-IF (Power source Control Interface) 33 is an interface for power source control. An AC adapter 34 rectifies and smooths commercially-available AC power to provide DC drive power of a predetermined potential. This AC adapter 34 is plugged in the body of the personal computer. A power source circuit 35, which is an intelligent power supply equipped with a CPU exclusively used for power control (PC-CPU), always monitors the status of the internal power under the control of the power control CPU. An M-BATT (Main BATTery) 36 is a detachable, chargeable battery of a pack type. An S-BATT (Sub BATTery) 37 is a built-in type, chargeable battery.

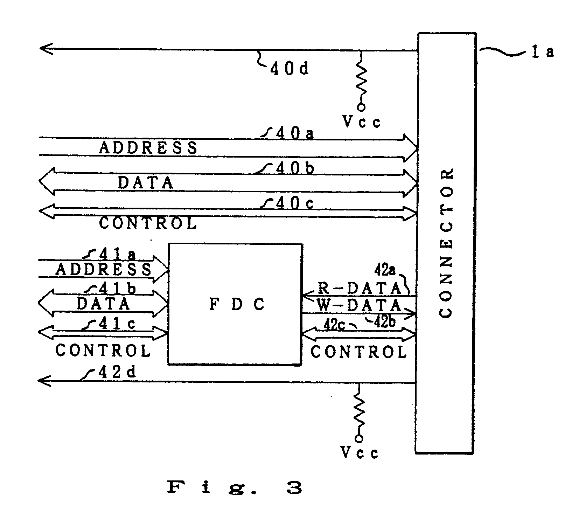

Fig. 3 presents a block diagram illustrating the structure of the pack unit receiving slot in the computer body.

The connector 1a located in the computer body serves to connect to a pack unit. Connected to the connector 1a are signal lines 40a, 40b, 40c and 40d for exchanging various types of information with the HDD unit 3, and signal lines 42a, 42b, 42c and 42d for exchanging various types of information with the FDD unit 4.

The signal line 40a serves to transfer address data to the HDD unit 3. The signal line 40b is for data exchange with the HDD unit 3, and the signal line 40c is for exchanging control data with the HDD unit 3. The signal line 40d is used to check if the HDD unit 3 is connected to the computer, and is connected via the signal line 40c to the CPU 11. With the HDD unit 3 unconnected, the signal line 40d is pulled up by the source voltage $V_{CC}$ to have a high level. When the HDD unit 3 is connected to the computer body, the signal level changes to a low level from the high level. When the CPU 11 detects this change in level, it determines that the HDD unit 3 is connected.

Various signals from the system bus 10, which concern FDD access, are exchanged with the FDC 20 through the signal lines 41a to 41c. More specifically, address data is exchanged via the signal line 41a, data via the signal line 41b, and control data via the signal line 41c. The FDC 20 uses signal lines 42a, 42b and 42c to access the FDD unit 4. When the external FDD 21 is connected to the computer body, the FDC 20 performs the access control using other signal lines (not shown). A signal line 42d is used to check if the FDD unit 4 is connected to the computer, and is connected via the signal line 42c to the CPU 11. With the FDD unit 4 unconnected, the signal line 42d is pulled up by the source voltage $V_{CC}$ to have a high level. When the FDD unit 4 is connected to the computer body, the signal level changes to a low level. When the CPU 11 detects this level change, it determines that the FDD unit 4 is connected.

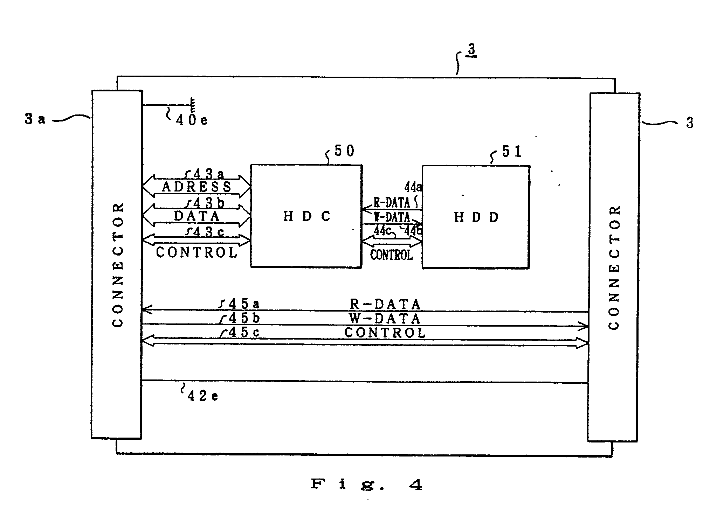

Fig. 4 is a block diagram illustrating the structure of the HDD unit 3. The HDD unit 3 comprises the connector 3a to be connected to the connector 1a of the body 1, the connector 3b to be connected to the connector 6a of the cable 6 in the case of using the FDD unit 4, an HDD 51 to store various data on the hard disk, and an HDC 50 to control the HDD 51.

Connected to the connector 3a are signal lines 43a, 43b, and 43c for permitting the computer body 1 to access the HDD 51, and signal lines 45a, 45b, and 45c for permitting the FDC 20 in the computer body 1 to access an FDD 52, a ground line 40e for permitting the CPU 11 to detect the connection of the HDD unit 3, and a signal line 42e for checking whether or not the FDD unit 4 is connected.

The HDC 50 uses a signal line 44a when reading data from the HDD 51, a signal line 44b when writing data, and a signal line 44c for controlling data reading/writing.

The above-described signal lines 45a, 45b, 45c, and 42e are connected to the connector 3b.

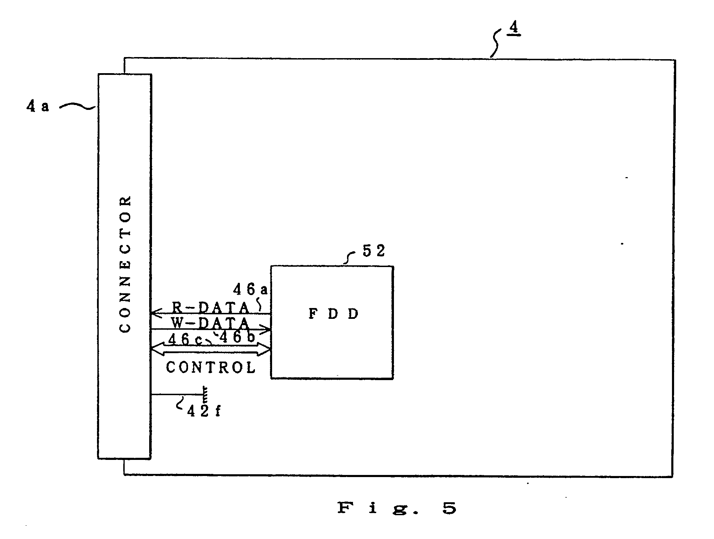

Fig. 5 is a block diagram illustrating the structure of the FDD unit 4.

The FDD unit 4 comprises the connector 4a to be connected to the connector 1a of the computer body 1 or to the connector 3b of the HDD unit 3, and the FDD 52 to store various data on the floppy disk.

Connected to the connector 4a are signal lines 46a, 46b, and 46c for permitting the FDC 20 in the computer body 1 to access the FDD 52, and a signal line 42f for checking whether or not the FDD unit 4 is connected.

The FDC 20 in the computer body 1 uses the signal line 46a when reading data from the FDD 52, the signal line 46b when writing data, and the signal line 46c for controlling data reading/writing.

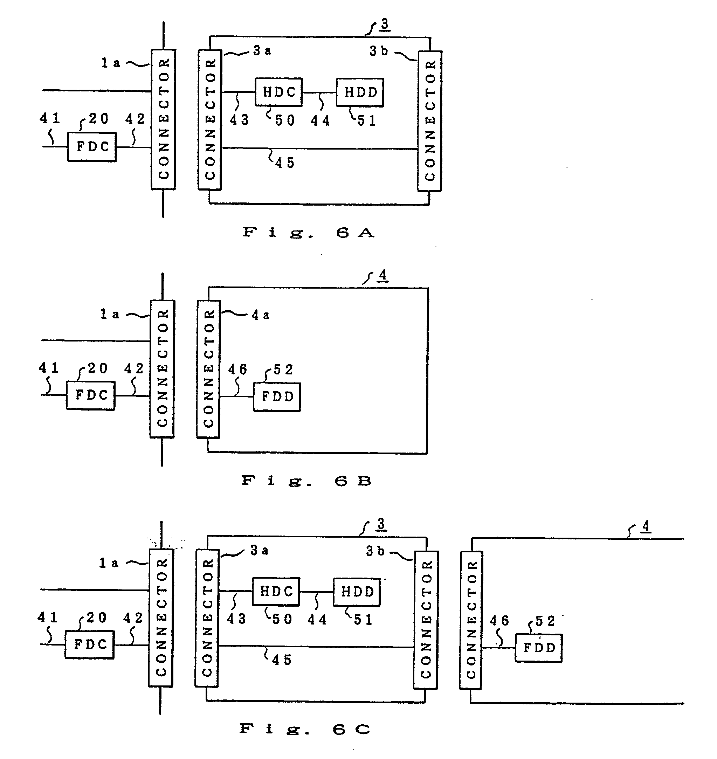

The operation of the system with the structure shown in Figs. 1 to 5 will be described below referring to Fig. 6.

Fig. 6A illustrates how the HDD unit 3 is connected to the computer body 1. When the HDD unit 3 is loaded into the receiving slot 5 of the computer body 1, the connector 1a is connected to the connector 3a. With the HDD unit 3 unconnected, the signal line 40d in the computer body is set at a high level by a pull-up resistance. When the HDD unit 3 is connected to the signal 40e through the connectors 1a and 3a, the signal level changes from high to low. The signal to indicate the connection of the HDD unit 3 is sent to the CPU 11 via the signal line 40c. Based on this signal from the signal line 40d, the CPU 11 acknowledges that the HDD unit 3 is connected.

In accessing the HDD 51, the CPU 11 first acknowledges the signal indicating the connection of the HDD unit 3. If the HDD unit 3 is connected, the CPU 11 access the HDD 51 for data reading/writing under the control of the HDC 50 as in the case of the ordinary access to the HDD 51. The signal line 42d is set at a high level in Fig. 6A, so that the CPU 11 judges that the FDD unit 4 is not connected. If the FDD unit 4 is accessed, therefore, an error message may appear on the display, indicating that the FDD unit is not yet connected.

Fig. 6C illustrates how the HDD unit 3 is connected to the computer body 1, and further the FDD unit 4 is connected to the HDD unit 3. When the HDD unit 3 is loaded in the receiving slot 5 of the computer body 1, the connector 1a is connected to the connector 3a. The connector 3b of the HDD unit 3 is connected to the connector 4a of the FDD unit 4 via the cable 6 (not shown). When both HDD unit 3 and FDD unit 4 are connected to the computer body 1, the signal levels of the signal lines 40d and 42d for checking the connection of the respective units change from high to low. The CPU 11 receives signals indicating the connection of the units via the respective signal lines 40c and 42c, and acknowledges that both HDD unit 3 and FDD unit 4 are connected.

The access to the HDD 51 is executed via the signal lines 40, 43 and 44, and the access to the FDD 52 via the signal lines 41, 42, 45 and 46. According to the structure of this embodiment, the HDD 51 and FDD 52 use different signal lines, so that they can be simultaneously accessed.

The description of this embodiment has been given with reference to a case where the FDC is provided in the computer body and the HDC is provided in the HDD unit. The reason for employing this structure is that as a single HDD is normally sufficient due to its large memory capacity, the HDC is incorporated in the HDD unit, whereas since a single FDD may not be sufficient due to its small memory capacity, requiring one or more additional FDDs by means of an expanding FDD, the FDC is provided in the computer body to cope with such expansion. The present invention is not however restricted to the particular case of this embodiment, but may be modified so that the HDC and FDC can both be provided in the computer body, or can be installed in the respective pack units. Alternately, the HDC may be provided in the computer body while the FDC is incorporated in the associated pack unit.

Althouth a special si9nal line is used to detect the connecting status of each pack unit according to this embodiment, this invention is in no way limited to this type. For instance, the controller or the like of external storage devices may be given with an address to indicate the connecting status of each external storage device, so that if a seek signal, for example, is sent to a plurality of connected external units at the time of activating the personal computer body and their operation is acknowledged, it is discriminated that the external storage devices are connected and the devices are allocated to the mentioned address. The controller of the external storage devices selects the proper device in response to an external storage device access command from the CPU, and accesses the selected external storage device.

In addition, although the description of this embodiment has been given with reference to a case where separate signal lines are provided for the respective pack units to access external storage devices, this invention is not limited to this case. For instance, the address signal and the control signal may be shared by different external storage devices, and for the data signal, some means to change the data structure may be used to minimize the number of required signal lines. In this case, the separate data signals are used for the respective external storage devices because the signal level, positive logic/negative logic, parallel/serial, the number of bits, access time, etc. may differ from one pack unit to another.

Although this embodiment has been described with reference to the HDD unit having a connector to connect to a FDD unit, this invention is not restricted to this type. For instance, the FDD unit may be provided with a connector to connect to another FDD unit or HDD unit, permitting each pack unit to be connected with a plurality of pack units.

Furthermore, although a cable is used to expand a pack unit in this embodiment, this invention is not limited to this particular type. For instance, connectors may be designed to be directly connectable to each other.

As described above, with the structure of this embodiment, the use of a pack unit type external storage device can allow the external storage device to be installed in the computer body while maintaining the portability, and another pack unit type external storage device can be connected to the installed pack unit via an expansion cable or the like, providing higher expandability and ensuring effective use of external storage devices.

## Claims

1. A computer system comprising
first storage means (4) having a storage device of a first storage mode and at least one connector to connect to a computer or another storage means;
second storage means (3) having a storage device of a storage mode different from that of said first storage means (4) and at least two connectors to connect to a computer (1) or another storage means; and
a computer (1) including
at least one connector (5) to connect to said first storage means (4) or said second storage means (3),
means for discriminating (40d, 42d, 11) a connecting status of said first storage means (4) or said second storage means (3), and
means for accessing (11) said first storage means (4) or said second storage means (3) based on said discriminated connecting status.

2. A computer system comprising
a computer (1) having a connector to which additional storage means is connectible;
first additional storage means (3, 4) having a disk storage device of a first storage mode and a connector (3a, 4a) capable of being connected to another storage means or directly to the connector on the computer (1);
second additional storage means (4, 3) having a disk storage mode different from that of the first storage means (3, 4), a connector (4a, 3a) capable of being connected directly to the connector on the computer and a further connector (3b) capable of being connected to another storage means;
said computer having means (40d, 42d, 11) for determining whether or not the first and/or second storage means is connected thereto and means for accessing one or more storage means connected to the computer.

3. A computer system as claimed in claim 1 or 2, characterised in that the computer has a receiving slot for receiving one of the additional storage means, and said first and second additional storage means each have an outer case of substantially the same size and being in the form of a rectangular parallelepiped.

4. A computer system as claimed in claims 1, 2 or 3, characterised in that the further connector of the second additional storage means is protected by a cover which is operable when access to the further connector is required.

5. A computer system as claimed in claim 1 or 2, characterised in that said discriminating means (40d, 42d, 11) has first discriminating means for discriminating if said first storage means (40d) is connected, and second discriminating means for discriminating (42d) if said second storage means is connected.

6. A computer system according to claim 1 or 2, characterised in that at least one of said connectors (3a, 3b) of said second storage means (3) has a first connecting section to connect to said storage device of said second storage means (3) and a second connecting section to connect to a separate storage device.

7. An external storage device connectible to a computer comprising
a first pack unit type storage device (3) having
a disk mechanism section (51) of a first storage mode,
a first connector (3a) to connect to said computer (1) or another pack unit type external storage device, and
a second connector (3b) to connect to another pack unit type external storage device; and
a second pack unit type storage device (4) having
a disk mechanism section (52) of a second storage mode, and
a connector (4a) to connect to said computer (1) or another pack unit type external storage device.

8. An external storage device according to claim 7, characterised in that said first and second connectors (3a, 3b) of said first pack unit type external storage device (3) and said connector (4a) of said second pack unit type external storage device (4) each comprise a portion to connect to said disk mechanism section (51) of said first storage mode (43) and a portion to connect to said disk mechanism section (52) of said second storage mode (45).

9. An external storage device according to claim 7, characterised in that said first pack unit type external storage device (3) and said second pack unit type storage device (4) each have means for informing (40e, 42f) self connection to said computer.

10. An external storage device according to claim 7, characterised in that said first pack unit type external storage device (3) and said second pack unit type external storage device (4) have cases of the same shape to be inserted into a receiving section of said computer.

EP 0 426 414 A2

Fig. 1

**Fig. 2**

F i g. 3

Fig. 4

4

4 a

CONNECTOR

52

46 a

R−DATA

W−DATA

46 c   46 b

CONTROL

42 f

F D D

Fig. 5

Fig. 6A

Fig. 6B

Fig. 6C